# EUROPEAN PATENT APPLICATION

(11) **EP 1 741 769 A1**
(43) Date of publication of application: **10.01.2007**
(21) Application number: 05014570.5
(22) Date of filing: 05.07.2005
(51) Int. Cl.: C10G 15/08, C10G 32/02, B01J 19/08

(54) **Apparatus and method for reacting chemical compounds**

(71) Applicant: Pribyshyn, Victor, 04108 Kiev (UA); Kruckow, Henry, 14167 Berlin (DE); Kadirhodjaev, Ulugbek, 700017 Trashkent (UZ); Nikolaevich, Kolchin Gennadiy, Saryagash, South Kazkhstan Region (KZ)
(72) Inventor: Pribyshin, Victor, 04108 Kiev (UA)
(74) Representative: Herrmann, Uwe

(57) **Abstract**

The invention is directed to a method for reacting chemical compounds in a reaction zone, wherein a material having magnetic permeability and high electric conductivity is located in the reaction zone, said method comprising the steps of application of a magnetic field in the reaction zone and providing pulses of electric current between electrodes, wherein said material is located between said electrodes.

## Description

The present invention is directed to a method for reacting chemical compounds in a reaction zone, preferably for converting hydrocarbons. The invention relates to oil-and-gas industry and can also be used to process the impoverished coal deposits and wood, to purify process water and underground water and to desalinate sea water.

A lot of methods are known for processing hydrocarbons such as the cracking of crude oil. Examples are the thermal or catalytic cracking as well as the cracking in the liquid phase using electric discharges. It is the object of the present invention to provide a method which permits to remarkably increase the efficiency and profitability of the units for processing chemical compounds, such as hydrocarbons, especially high-molecular hydrocarbons such as crude oil, mazut, oil, pitch etc.

This problem is solved by a method according to claim 1 as well as by a reactor according to claim 11. It has been observed that high-molecular hydrocarbon compounds which are pumped through or are present in a powder or grains having magnetic permeability held by a magnetic field and which are provided with current pulses are cracked and the conversion of high-molecular hydrocarbon complexes into low-molecular products will preferably take place on the films created on the powder/grains of the metallic powder. The method proposed uses high-frequency electromagnetic fields for example of metallic powder carbon as a factor affecting molecules and atoms of hydrocarbons. It has been noted that the reaction preferably is performed by use of oil in a finely dispersed, capillary or thin-filmed state. Such state is provided by magnetic powder from for example high carbon steel or other materials having magnetic permeability and high electric conductivity. The powder is provided in an active zone of the reactor and held there by use of a strong magnetic field.

At the moment of powerful short pulse advancing in the active zone of the reactor all four aggregate states of the reactants may be observed, i.e. solid, liquid, gaseous and plasma. Converting processes are realized on the boundary surface of any aggregative substance state.

Further embodiments of the invention are the subject-matter of further subclaims.

The feedstock may be composed of or may comprise hydrocarbons such as crude-oil, mazut, oil and pitch.

As outlined above it is of particular advantage if said material is provided in form of grains or powder and that the chemical compounds or the liquid containing said chemical compounds is present in the reaction zone to such extent that films are created on said material.

The pulses of electric current may be provided with a density in the range of 10⁴ to 10⁶ A/mm². The duration of the pulses may be in the range between 0 and 0,1 µs, preferably in the range between 0 and 0,001 µs. The amplitude of the pulses is preferably in the range up to 100 kV, preferably up to 25 kV. Further parameters which may be varied are the reaction temperature and pressure as well as the number of pulses applied.

In a further aspect of the invention the chemical compound to be converted is fed through the reaction zone continuously and the magnetic field is applied such that said material is held in place by the magnetic field. The chemical compound may be fed through the reaction zone continuously and perpendicularly to the lines of the magnetic field.

The reaction zone may be formed by an annular space limited by said electrodes. It is preferred to feed the chemical compound through the reaction zone continuously either from one end of said space to the other end or from both ends or said space to a central portion thereof.

The invention further is directed to a reactor comprising at least two electrodes defining a reaction zone therebetween, which electrodes being provided or connected with means for providing electric current pulses between said electrodes, means for providing a magnetic field in the reaction zone as well as a material having magnetic permeability being located in the reaction zone.

One or both of the electrodes are preferably tubular defining said reaction zone there between. The cross sectional shape of the electrodes and thus of the reaction zone may be circular, rectangular, square, triangular, polygonal, etc.

Preferably one of the electrodes is formed by the reactor body. It is preferred that the electrodes are arranged concentrically.

In a further embodiment of the invention one of the electrodes consists of a magnetic material and one of the electrodes consists of a nonmagnetic material.

The reactor may have two inlets in the end portions thereof and one outlet in a central portion thereof.

Said material being located in the active zone may consist of or may be comprised carbon-steel. The carbon content should be high enough so as to avoid welding or sintering of the material. In addition, it is possible that said material consists of or comprises a metallic carrier provided with a catalyst.

The catalyst may be a precious metal or alumina silicate or any other catalyst suitable for accelerating the chemical reaction.

It is particularly advantageous if said material is electrically conductive.

The invention is further directed to a system, such as a plant or a pilot plant or a part thereof, for reacting chemical compounds comprising at least two reactors according to any one of claims 11 to 19. In order to increase the performance (capacity, turnover and/or yield) of such system at least two of the reactors are arranged in parallel and/or in series. The reactors may be arranged in parallel or alternatively serially. Of course a combination of a parallel and serial arrangement is also possible. In this case the feed material is distributed over said parallel reactors and the product thereof is fed to the respective serial reactor. Two or more than two reactors may be arranged in parallel and/or in series.

Further advantages of the invention will become evident from the following drawing:
Fig. 1: a schematical view of the reactor according to the present invention;
Fig. 2: a flow sheet of a conversion plant including the reactor according to the present invention;
Fig. 3: a flow sheet of a conversion plant according to another embodiment including the reactor according to the invention.
Fig. 4: shape of the electric current pulse
Fig. 5, 6: temperature of the evaporator versus distillate fraction for different reaction conditions.

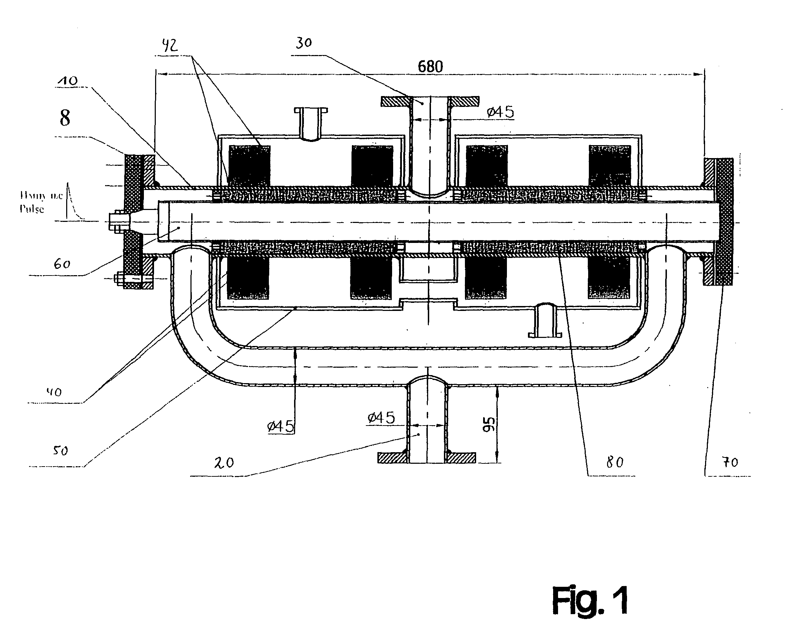

Fig. 1 shows the reactor for the conversion of hydrocarbons. The reactor consists of a tubular body 10. The body 10 is provided with three openings in its circumferential area, wherein two openings are located in the end portions of the body 10 and one opening is located in a center portion thereof. The body 10 is connected with an inlet header 20 which is composed of an U-shaped tube and which communicates with the body 10 via the openings in the end portions of the body 10. A tubular outlet header 30 is arranged so as to communicate with the center opening of the body 10.

The body 10 is made of nonmagnetic material.

Magnets 40 with magnetic circuits 42 are arranged to the left and to the right of the center opening of the body 10 and between the openings of the body which are located in the end portions of the body 10. The magnets 40 are located at the circumferential area of the tubular body 10. The magnets 40 are positioned within a jacket 50 having an inlet and an outlet. The jacket 50 is filled with water or with oil for cooling of the magnets 40.

Within the body 10 and concentrically thereto is placed the electrode 60 which is made of magnetic material and fastened through insulators 70 at the flanges of the body 10. The space between the electrode 60 and the body 10 is filled with a fine dispersed metallic powder 80.

The working mode of the reactor is as follows: Liquid to be converted enters the header 20 and is fed to body 10 of the reactor under pressure via the openings of the body 10 which are located in the end portions thereof. After entering the body 10 the liquid is fed through openings in disks fixing the metallic powder 80 through the active zone of the reactor and from there the reaction product is issued from the reactor via outlet header 30. The active zone of the reactor is the space between the internal electrode 60 and the body 10 in which said metallic powder 80 is located. The body 10 is the external electrode of the arrangement.

The powder 80 posesses magnetic permeability. It is a fine-grained powder which has magnetic capacity and is made of or comprises high-carbon steel having high electric conductivity.

In order to limit the temperature of the magnetic system water or oil is located or fed through water jacket 50.

The magnetic system is made of NdFeB magnets 40 which are placed at the outside surface of the body 10 and inside the water jacket 50 as shown in Fig. 1.

The amount of fine-grained powder 80 as well as the amount of feed liquid is chosen so that each grain is covered with a thin film of liquid.

During operation of the reactor a strong magnetic field is applied by means of the magnets 40. Preferably the magnetic field has a surface induction of 0,3 to 0,5 T. The magnetic field ensures that the powder 80 remains in place, i. e. is not washed out, in form of a fine dispersed lattice when liquid is fed through the reactor. The lattice exhibits a capillary force and has a high surface area thus providing a large reaction area for the liquid which is present on the powder in form of a thin film. Another function of the magnetic field is to positively influence the reaction taking place in order to convert the educt. The magnetic field influences the spin orientation of the electrons of the reaction substances and thus influences the process of free radical reactions.

In addition to the strong magnetic field current pulses of short duration are generated and pass from the internal electrode 60 of the reactor to the body 10 which forms the external electrode. Oil-stained metallic powder 80 with its grains oriented according to the magnetic field lines is located between the electrodes. The electric current pulses have a density of 10⁴ to 10⁶ A/mm² and pass through the powder particles. The pulses excite the metal carbon of the powder that in turn excites and activates oil carbon in the thin film on the powder particles surface. This leads to the cracking of the oil and as a result the conversion of oil occurs.

As outlined above, the function of the magnetic field is not only to keep the powder particles in place but further to influence the reaction process. The magnetic field participates in the resonance process.

According to quantum mechanics chemical conversions depend upon the electron spin of the electrons of chemical elements. The magnetic field applied at least in the reaction zone of the reactor thus influences the reaction process. Larmor precession conditions (ω₀ = γ H₀) which are the conditions of nuclear and electron paramagnetic resonance are met in the active zone of the reactor. The active zone of the reactor is located in said strong magnetic field. A powerful electromagnetic pulse propagation in the local zones takes place (spin-echo).

Under the influence of the powerful current pulse active ion radical particles are generated in the active zone, which mutual interaction defines the course of chemical reaction. As far as all the chemical reactions take place according to the free radical mechanism electric current pulses are the starting mechanism of hydrocarbon conversion reaction.

As outlined above high carbon metallic powder is located between the electrodes for generating electric current pulses. This powder fulfils the following functions:
a) it provides developed surface for a thin-film coating of the powder particles
b) it provides a very high conductivity of the oil-powder system
c) metallic powder carbon which is excited with a powerful current pulse functions as catalyst in cracking of hydrocarbons such as oil and mazut.

As shown above, powerful electric currents passing through the powder-oil system generate electromagnetic waves. In addition, thermal, optical (photon) and acoustic waves occur as well, which generates secondary cavitation processes.

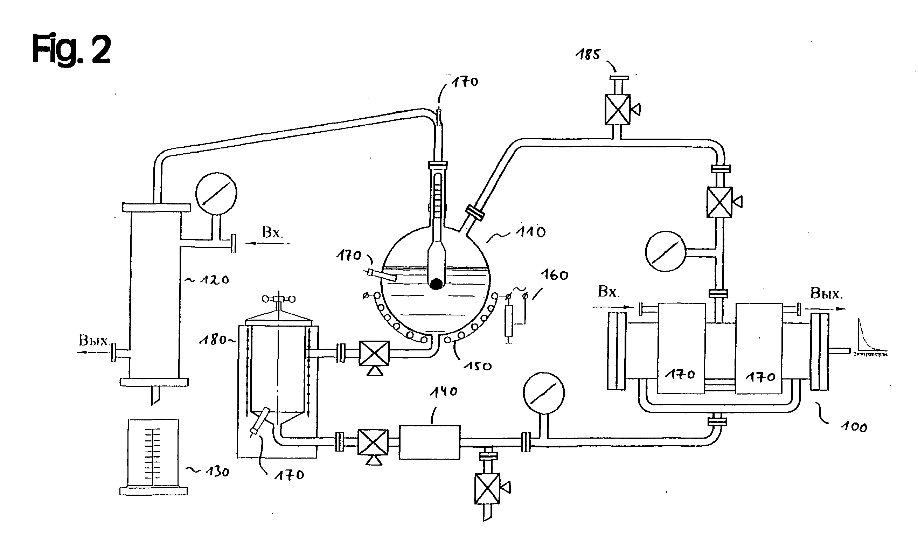

Fig. 2 depicts a schematic view of the plant for converting hydrocarbons such as oil including the reactor shown in Fig. 1 which has reference numeral 100. The reactor outlet is connected via a pipe with the evaporator 110 which serves for distillation of the reaction product. The gaseous phase from the evaporator 110 is led to the condenser 120 which condenses the gas to a liquid which is collected in the volume and weight store 130.

The liquid phase in the evaporator 110 is drawn into the furnace 180 for heating the liquid and from there via pump 140 to the inlet of the reactor 100. Reference numerals 150 and 160 are directed to the heater of the evaporator 110 and to a voltage regulator of the evaporator for adjusting the heating power.

Reference numerals 170 depict thermocouples.

As shown in Fig. 2 an Argon blow 185 is located in the line connecting the reactor 100 with the evaporator 110.

As outlined above with regard to Fig. 1 the reactor is provided with a magnetic system which is shown in Fig. 2 with reference numeral 170. Cooling liquid, preferably water or oil is fed continuously through the cooling jacket of the magnets 170 and through the condenser 120.

The pump 140 provides continuous flow of liquid through the reactor. The pressure in the reactor according to the present invention may be in the range between 10 and 100 bar. This of course is merely an example. Basically the reaction could also take place without applying pressure.

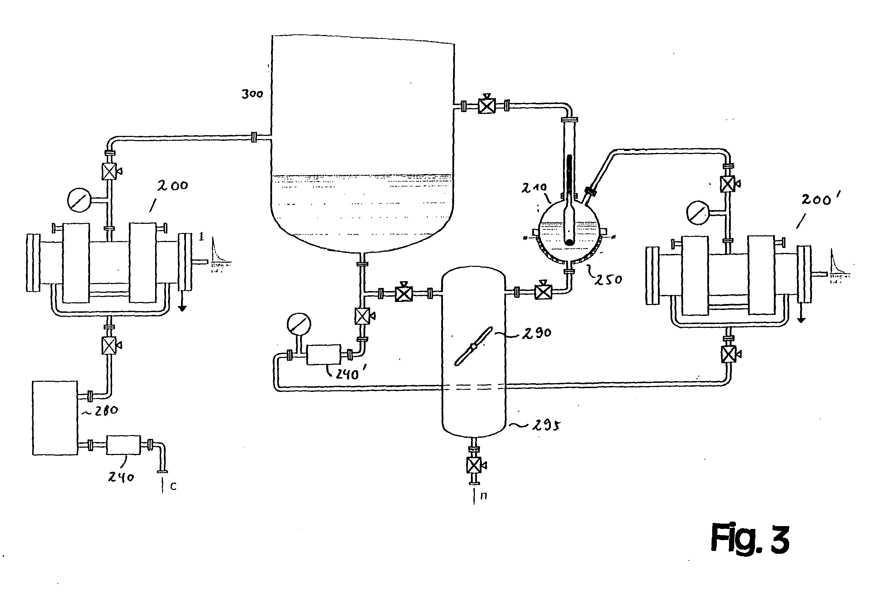

Fig. 3 shows a flow sheet of an alternative embodiment of a plant for converting hydrocarbons. Crude oil C enters the plant and is fed via pump 240 into the furnace 280 for heating the crude oil. Thereafter the crude oil enters the reactor 200 according to the present invention. The reactor outlet is fed into the distillation column 300.

The liquid which collects in the bottom portion of the column 300 is withdrawn from the column 300 and fed via pump 240' to a second reactor 200'. The outlet from reactor 200' is fed to evaporator 210 being provided with the electric heater 250. The gaseous phase from the evaporator 210 is led to the column 300. The liquid phase from the evaporator 210 is circulated by means of said pump 240' or withdrawn from the plant depending on the position of the shutter 290. Numeral 295 depicts a separator from which the reaction product n may be obtained.

Reactors 200 and 200' are identical and are both provided with magnets 270 as outlined above.

It has been successful to apply a plant shown in Fig. 3 to increase effectiveness of oil processing. On the basis on a long-term laboratory and half-industrial test convincing results have been obtained which permits to assume the following: In real full-scale industrial conditions the proposed method and device allows full oil processing with light fractions output of 95-98 % and solid residue of 5-2 % presented by precious and rare-earth metals, such as vanadium. Specific power inputs for example include 2,7 kW/h 1m³.

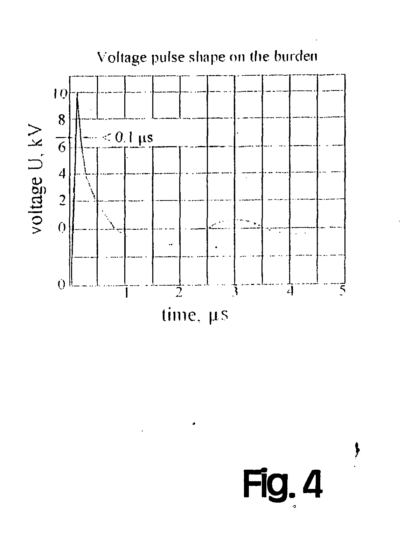

Fig. 4 shows the electric current pulse as the voltage [kV] versus the time [µs]. As may be derived from Fig. 4 the amplitude is approx. 10 kV. The amplitude may of course be larger or smaller than this value. A preferred range is up to 100 kV. The electric current pulse consists of a multiplicity of frequencies which excite the electrons of the reactants.

As outlined above it is a preferred characteristic of the powder to be electrically conductive. The resistance of Mazut at a temperature of 70 °C is higher than 1000 MΩ. After introduction of high-carbon steel with a duty factor of 0,7 in oil and mazut the resistance of the system was registered on the level of 0,01 Ω.

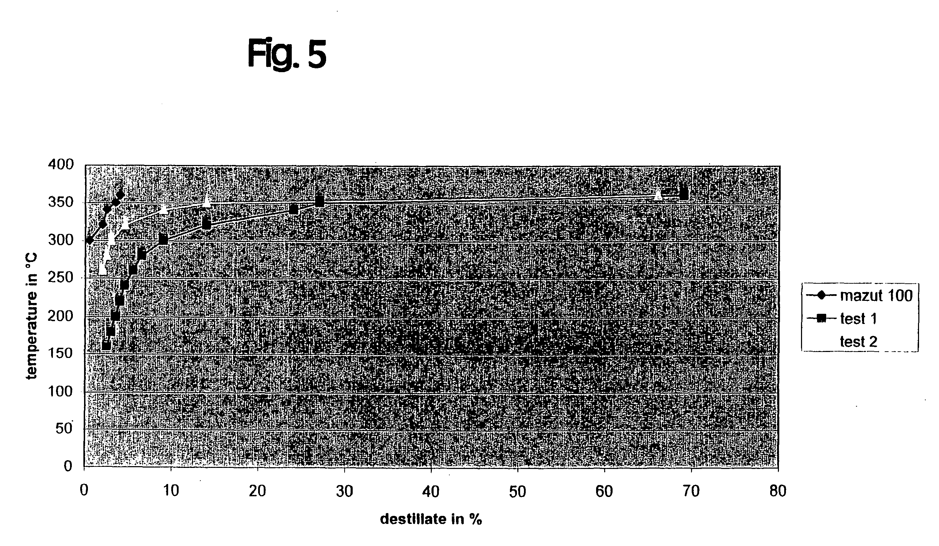

Fig. 5 depicts the result from the distillation of the reaction product of the reactor according to the present invention.

The tests have been made with Mazut without conversion and with Mazut treated with two parallel reactors according to the invention. In test 1 and 2 the pressure within the reactor has been 10 Atm. In test 1 80 pulses having an amplitude of 9,5 kV and in test 2 120 pulses having an amplitude of 9,0 kV have been applied. As may be seen from a comparison between test 1 and test 2 the increase of the pulse amplitude has a positive influence on the conversion reaction as more distillate is obtained in test 1 than in test 2.

Both tests unveil that the reaction product has a remarkably higher distillate portion than Mazut which has not been converted. The difference especially may be seen at a temperature of 350 in which the tests 1, 2 unveil approx. 70 % distillate whereas Mazut has a distillate content of less than 5 %.

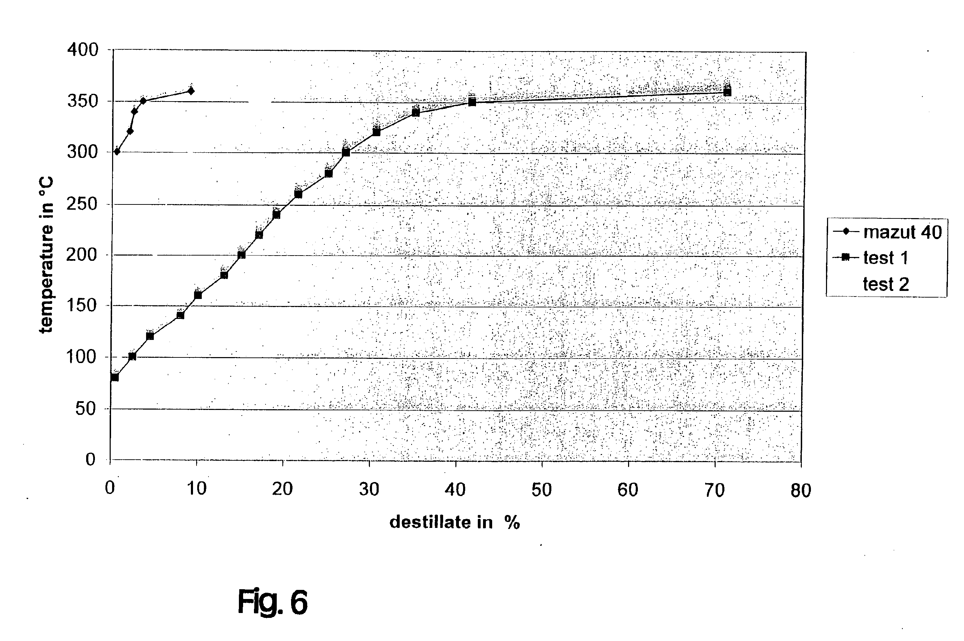

Fig. 6 illustrates the influence of the number of pulses on the reaction efficiency. Both test 1 and test 2 according to Fig. 6 have been made at 10 Atm pressure and applying a pulse amplitude of 9,5 kV. However, in test 1 45 pulses and in test 2 only 12 pulses were applied. As may be seen from Fig. 6 the increase of the number of pulses leads to an increase of the distillate fraction. Fig. 6 also shows that the reaction product of both tests comprises much more distillate than unconverted Mazut.

## Claims

1. Method for reacting chemical compounds in a reaction zone, wherein a material having magnetic permeability and electric conductivity is located in the reaction zone, said method comprising the steps of application of a magnetic field in the reaction zone and providing pulses of electric current between electrodes, wherein said material is located between said electrodes.

2. Method according to claim 1, wherein the chemical compounds are composed of or comprise hydrocarbons such as crude-oil, mazut, oil and pitch.

3. Method according to claim 1 or 2, wherein said material is provided in form of grains or powder and that the chemical compound present in the reaction zone creates films on said material.

4. Method according to any one of the preceding claims, wherein said pulses of electric current are provided with a density in the range of 10⁴ to 10⁶ A/mm².

5. Method according to any one of the preceding claims, wherein the duration of the pulses of electric current is in the range between 0 and 0,1 µs, preferably in the range between 0 and 0,001 µs.

6. Method according to any one of the preceding claims, wherein the amplitude of the pulses of electric current is in the range up to 100 kV, preferably up to 25 kV.

7. Method according to any one of the preceding claims, wherein the chemical compound is fed through the reaction zone continuously and wherein the magnetic field is applied such that said material is held in place by the magnetic field.

8. Method according to any one of the preceding claims, wherein the chemical compound is fed through the reaction zone continuously locally and perpendicularly to the lines of the magnetic field.

9. Method according to any one of the preceding claims, wherein the reaction zone is formed by a space having cylindrical inner and outer walls formed by said electrodes.

10. Method according to claim 9, wherein the chemical compound is fed through the reaction zone continuously either from one end of said space to the other end or from both ends of the space to a central portion thereof.

11. Reactor comprising at least two electrodes defining a reaction zone therebetween, which electrodes being provided or connected with means for providing electric current pulses between said electrodes, means for providing a magnetic field in the reaction zone as well as a material having magnetic permeability and electric conductivity being located in the reaction zone.

12. Reactor according to claim 11, wherein one or both of the electrodes are tubular defining said reaction zone therebetween.

13. Reactor according to claim 11 or 12, wherein one of the electrodes is formed by the reactor body.

14. Reactor according to any one of the preceding claims, wherein the electrodes are arranged concentrically.

15. Reactor according to any one of the preceding claims, wherein one of the electrodes consists of a magnetic material and one of the electrodes consists of a nonmagnetic material.

16. Reactor according to any one of the preceding claims, wherein the reactor has two inlets in the end portions thereof and one outlet in a central portion thereof.

17. Reactor according to any one of the preceding claims, wherein said material consists of or comprises high-carbon steel.

18. Reactor according to any one of the preceding claims, wherein said material consists of or comprises a metallic carrier provided with a catalyst.

19. Reactor according to claim 18, wherein said catalyst is a precious metal or aluminasilicate.

20. System for reacting chemical compounds comprising at least two reactors according to any one of claims 11 to 19 wherein at least two of the reactors are arranged in parallel and/or serially.
